# EUROPEAN PATENT APPLICATION

(11) **EP 4 650 095 A1**
(43) Date of publication of application: **19.11.2025**
(21) Application number: 25175652.4
(22) Date of filing: 12.05.2025
(51) Int. Cl.: B23Q 1/70, B23Q 11/00, F16F 9/53

(54) **ACTIVE DAMPER FOR MACHINE SPINDLES**

(30) Priority: 13.05.2024 US 202418661858
(71) Applicant: RTX Corporation, Farmington, CT 06032 (US)
(72) Inventor: Chandler, Eric K., Higganum, 06441 (US)
(74) Representative: Schmitt-Nilson Schraud Waibel Wohlfrom Patentanwälte Partnerschaft mbB

(57) **Abstract**

An active damper for machine spindles including a spindle shaft having a motor end opposite an endmill end and a damper portion located between the motor end and the endmill end; a spindle motor in operative communication with the spindle shaft proximate the motor end; an endmill in operative communication with the spindle shaft proximate the endmill end; a damping chamber surrounding the spindle shaft proximate the damper portion, wherein the damping chamber comprises a containment envelope containing a ferrofluid; at least one damping tab attached to the spindle shaft located within the damping chamber, the at least one damping tab in operative communication with the ferrofluid; electromagnets in operative communication with the ferrofluid; and a spindle position sensor in operative communication with the spindle shaft, the spindle position sensor configured to detect a magnitude of motion and relative position of the spindle shaft.

## Description

The present disclosure is directed to the improved active damper for machine spindles.

Subtractive manufacturing machine spindles experience vibrations throughout cutting cycles. These vibrations can cause poor surface finish, tool/machine damage, and incorrect geometry. Control of spindle vibrations is needed.

In accordance with the present disclosure, there is provided an active damper for machine spindles comprising a spindle shaft having a motor end opposite an endmill end and a damper portion located between the motor end and the endmill end; a spindle motor in operative communication with the spindle shaft proximate the motor end; an endmill in operative communication with the spindle shaft proximate the endmill end; a damping chamber surrounding the spindle shaft proximate the damper portion, wherein the damping chamber comprises a containment envelope containing a ferrofluid; at least one damping tab attached to the spindle shaft located within the damping chamber, the at least one damping tab in operative communication with the ferrofluid; electromagnets in operative communication with the ferrofluid; and a spindle position sensor in operative communication with the spindle shaft, the spindle position sensor configured to detect a magnitude of motion and relative position of the spindle shaft.

Particular embodiments further may include at least one, or a plurality of, the following optional features, alone or in combination with each other:

A further embodiment of any of the foregoing embodiments may additionally and/or alternatively include the active damper for machine spindles further comprising a control system in operative communication with the spindle position sensor and the electromagnets.

A further embodiment of any of the foregoing embodiments may additionally and/or alternatively include the damping tab is configured to impinge with the ferrofluid, such that the ferrofluid can at least one of constrain the movement of the damping tab and allow movement of the damping tab responsive to the viscosity of the ferrofluid.

A further embodiment of any of the foregoing embodiments may additionally and/or alternatively include the active damper for machine spindles further comprising flow orifices formed within the damping tab, wherein the flow orifices are configured to influence the reaction of the damping tab relative to the ferrofluid.

A further embodiment of any of the foregoing embodiments may additionally and/or alternatively include the containment envelope containing a ferrofluid is sealed closed, such that the ferrofluid is contained and does not flow outside the containment envelope.

A further embodiment of any of the foregoing embodiments may additionally and/or alternatively include the electromagnets are located within the containment envelope and in contact with the ferrofluid.

A further embodiment of any of the foregoing embodiments may additionally and/or alternatively include the active damper for machine spindles further comprising a sealed bearing supporting the spindle shaft proximate a spindle shaft penetration formed through the containment envelope; the spindle shaft being received through the spindle shaft penetration; the sealed bearing configured to prevent ferrofluid leakage out of the containment envelope along the spindle shaft.

In accordance with the present disclosure, there is provided an active damper system for a machine spindle comprising a spindle shaft having a motor end opposite an endmill end and a damper portion located between the motor end and the endmill end; a spindle motor in operative communication with the spindle shaft proximate the motor end; an endmill in operative communication with the spindle shaft proximate the endmill end; a damping chamber surrounding the spindle shaft proximate the damper portion, wherein the damping chamber comprises a containment envelope containing a ferrofluid; at least one damping tab attached to the spindle shaft located within the damping chamber, the at least one damping tab in operative communication with the ferrofluid; electromagnets in operative communication with the ferrofluid, the electromagnets configured to produce an electromagnetic field that changes the viscosity of the ferrofluid; a spindle position sensor in operative communication with the spindle shaft, the spindle position sensor configured to detect a magnitude of motion and relative position of the spindle shaft; and a control system in operative communication with the spindle position sensor and the electromagnets.

Particular embodiments further may include at least one, or a plurality of, the following optional features, alone or in combination with each other:

A further embodiment of any of the foregoing embodiments may additionally and/or alternatively include the damping tab is configured to impinge with the ferrofluid, such that the ferrofluid can at least one of constrain the movement of the damping tab and allow movement of the damping tab responsive to the viscosity of the ferrofluid.

A further embodiment of any of the foregoing embodiments may additionally and/or alternatively include the at least one damping tab comprises a first damping tab and a second damping tab attached to the spindle shaft, the first damping tab and second damping tab being orthogonal to each other relative to an axis of the spindle shaft.

A further embodiment of any of the foregoing embodiments may additionally and/or alternatively include the first damping tab and the second damping tab are oriented relative to each other configured to influence damping vibration along the spindle shaft in the X axis and Y axis directions relative to the axis of the spindle shaft being a Z axis.

A further embodiment of any of the foregoing embodiments may additionally and/or alternatively include the active damper system for a machine spindle further comprising a sealed bearing supporting the spindle shaft proximate a spindle shaft penetration formed through the containment envelope; the spindle shaft being received through the spindle shaft penetration; the sealed bearing configured to prevent ferrofluid leakage out of the containment envelope along the spindle shaft.

A further embodiment of any of the foregoing embodiments may additionally and/or alternatively include the at least one damping tab can extend radially outward from a longitudinal axis of the spindle shaft a predetermined width and the damping tab can extend longitudinally along the spindle shaft a predetermined length.

In accordance with the present disclosure, there is provided a process of forming an active damper system for a machine spindle comprising providing a spindle shaft having a motor end opposite an endmill end and a damper portion located between the motor end and the endmill end; attaching a spindle motor in operative communication with the spindle shaft proximate the motor end; attaching an endmill in operative communication with the spindle shaft proximate the endmill end; surrounding the spindle shaft proximate the damper portion with a damping chamber, wherein the damping chamber comprises a containment envelope containing a ferrofluid; attaching at least one damping tab to the spindle shaft located within the damping chamber; contacting the at least one damping tab in operative communication with the ferrofluid; placing electromagnets in operative communication with the ferrofluid, the electromagnets configured to produce an electromagnetic field that changes the viscosity of the ferrofluid; placing a spindle position sensor in operative communication with the spindle shaft, the spindle position sensor configured to detect a magnitude of motion and relative position of the spindle shaft; and coupling a control system in operative communication with the spindle position sensor and the electromagnets.

Particular embodiments further may include at least one, or a plurality of, the following optional features, alone or in combination with each other:

A further embodiment of any of the foregoing embodiments may additionally and/or alternatively include the process further comprising configuring the damping tab to impinge with the ferrofluid; constraining the movement of the damping tab with the ferrofluid responsive to the viscosity of the ferrofluid; and allowing movement of the damping tab with the ferrofluid responsive to the viscosity of the ferrofluid.

A further embodiment of any of the foregoing embodiments may additionally and/or alternatively include the at least one damping tab comprises a first damping tab and a second damping tab attached to the spindle shaft, the first damping tab and second damping tab being orthogonal to each other relative to an axis of the spindle shaft.

A further embodiment of any of the foregoing embodiments may additionally and/or alternatively include the process further comprising forming flow orifices within the at least one damping tab; and configuring the flow orifices to influence the reaction of the at least one damping tab relative to the ferrofluid.

A further embodiment of any of the foregoing embodiments may additionally and/or alternatively include the process further comprising supporting the spindle shaft with a sealed bearing proximate a spindle shaft penetration formed through the containment envelope; the spindle shaft being received through the spindle shaft penetration; and configuring the sealed bearing to prevent ferrofluid leakage out of the containment envelope along the spindle shaft.

A further embodiment of any of the foregoing embodiments may additionally and/or alternatively include the process further comprising orienting the first damping tab and the second damping tab relative to each other configured to influence damping vibration along the spindle shaft in the X axis and Y axis directions relative to the axis of the spindle shaft being a Z axis.

A further embodiment of any of the foregoing embodiments may additionally and/or alternatively include the process further comprising detecting vibration magnitude and direction in the machine spindle with the spindle position sensor; cancelling out a vibration occurring in the X axis direction by exciting the ferrofluid when the first damping tab is located at a predetermined X position; and cancelling out vibration occurring in the Y axis direction by exciting the ferrofluid when the second damping tab is located at a predetermined Y position.

Other details of the active damper for machine spindles are set forth in the following detailed description and the accompanying drawings wherein like reference numerals depict like elements.
Fig. 1 is a perspective cross sectional view schematic representation of an exemplary active damper for machine spindles.
Fig. 2 is a top view schematic representation of an active damper for machine spindles.
Fig. 3 is a cut view schematic representation of the active damper for machine spindles of Fig. 2.
Fig. 4 is a cut view schematic representation of the active damper for machine spindles of Fig. 3.

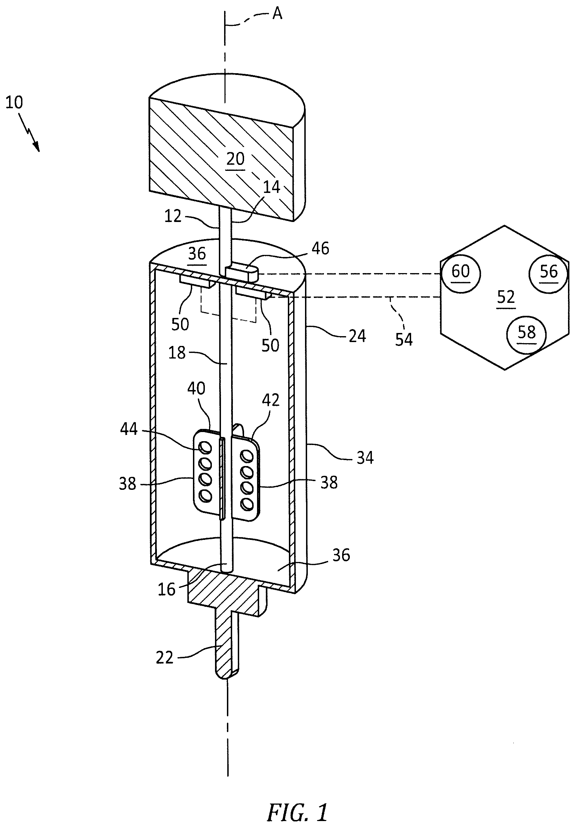

Referring now to Fig. 1 through Fig. 4, there is illustrated an exemplary active damper for machine spindle 10. The active damper for machine spindle 10 includes a spindle shaft 12. The spindle shaft 12 includes an axis A. The spindle shaft 12 includes a motor end 14 and an endmill end 16 opposite the motor end 14. A damper portion 18 of the shaft is located between the motor end 14 and the endmill end 16.

A spindle motor 20 is in operative communication with the spindle shaft 12 proximate the motor end 14 of the spindle shaft 12. The spindle motor 20 provides rotary motion to the spindle shaft 12 about the axis A.

An endmill 22 is in operative communication with the spindle shaft 12 proximate the endmill end 16 of the spindle shaft 12. The endmill 22 can be a cutting tool and the like. The endmill 22 can be rotated by the spindle shaft 12 driven by the spindle motor 20 to provide material removal processing.

A damping chamber 24 is in operative communication with the spindle shaft 12. The damping chamber 24 can surround the spindle shaft 12. The damping chamber 24 can be located proximate the damper portion 18 between the endmill 22 and the spindle motor 20. The damping chamber 24 includes a containment envelope 26 configured to contain a ferrofluid 28. The containment envelope 26 can be filled with ferrofluid 28 and devoid of any air. The containment envelope 26 can be sealed closed, such that the ferrofluid 28 is contained and does not flow outside the containment envelope 26. In an exemplary embodiment, the containment envelope 26 is formed as a cylinder 34 with opposing endplates 36 that each include a spindle shaft penetration 32. The containment envelope 26 supports sealed bearings 30 proximate the spindle shaft penetration 32 through the containment envelope 26. The spindle shaft 12 is received through the spindle shaft penetration 32. The sealed bearings 30 prevent ferrofluid 28 leakage out of the containment envelope 26 or along the spindle shaft 12.

A damping tab 38 can be attached to the spindle shaft 12. The damping tab 38 can extend radially outward from the axis A of the spindle shaft 12 a predetermined width W. The damping tab 38 can extend longitudinally along the spindle shaft 12 a predetermined length L. The damping tab 38 can be a rectilinear shaped paddle (as shown), square shaped paddle, oval shaped paddle, and the like. The damping tab 38 can be located proximate the damping portion 18 of the spindle shaft 12. The damping tab 38 can be located within the containment envelope 26. The damping tab 38 can be in operative communication with the ferrofluid 28, such that the ferrofluid 28 influences the movement of the damping tab 38. In an exemplary embodiment, the ferrofluid 28 can impinge on the damping tab 38 and physically constrain the movement of the damping tab 38 and/or allow movement of the damping tab 38 responsive to the viscosity of the ferrofluid 28.

The ferrofluid 28 can include a ferromagnetic 28a particle suspended in a carrier fluid 28b. The ferrofluid 28 can be a magnetorheological fluid. The properties of ferrofluid are fluids that are mildly shear thinning, viscous materials in the absence of an electrical field, but behave similarly to a Bingham fluid in the presence of electric fields. In the presence of an electric field, these materials appear to have a yield stress before flow and an elevated viscosity during flow.

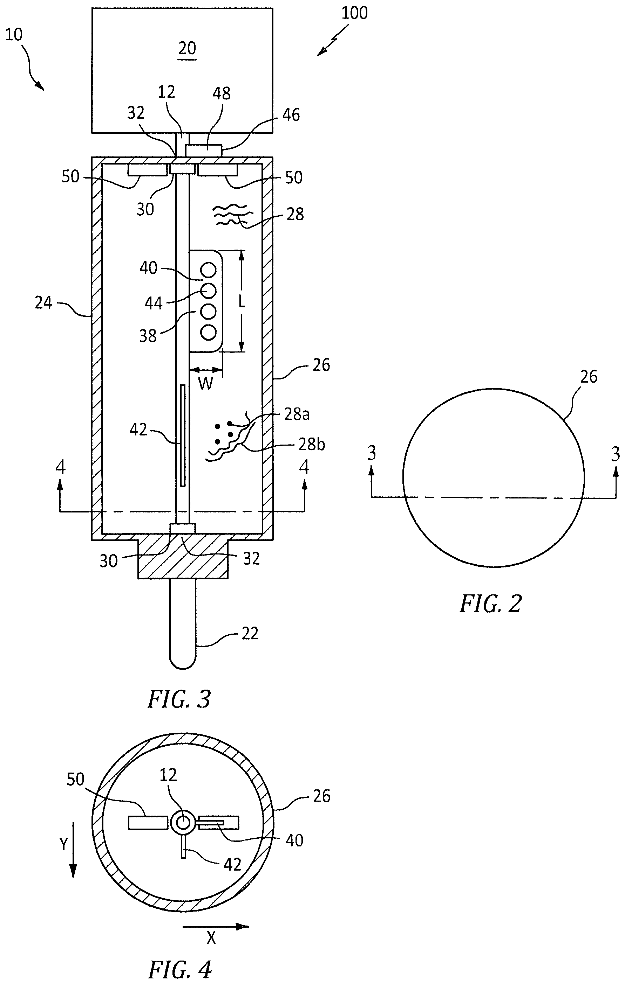

In an exemplary embodiment, a first damping tab 40 and a second damping tab 42 can be attached to the spindle shaft 12. The first damping tab 40 and second damping tab 42 can be orthogonal to each other relative to the axis A, as shown in Fig. 3 and Fig. 4. The first damping tab 40 can be located at the same longitudinal location along the spindle shaft 12 as seen in Fig. 1. The first damping tab 40 can be located at different longitudinal locations along the spindle shaft 12 as seen in Fig. 3. It is contemplated that the first damping tab 40 and the second damping tab 42 can be oriented relative to each other in a variety of ways and configured to influence damping vibration along the spindle shaft 12 in the X axis and Y axis directions as shown at Fig. 4. In an exemplary embodiment the damping tab 42 can be shaped as a helix shaped tab 28 wrapped around the spindle shaft 12 configured to dampen vibrations along the X axis, Y axis and Z axis.

Flow orifices 44 can be formed within the damping tab 38. The flow orifices 44 can influence the reaction of the damping tab 38 relative to the ferrofluid 28. The flow orifices 44 can be sized and have a quantity depending on predetermined values required by the machine spindle 100. The flow orifices 44 react with the ferrofluid 28 and control the fluid dynamics between the damping tab 38 and the ferrofluid 28. The flow orifice 44 size and quantity can be influenced by the machine tool size and horsepower to provide the predetermined quantity of opposing force to resist spindle vibrations.

A spindle position sensor 46 can be in operative communication with the spindle shaft 12. The spindle position sensor 46 is shown outside of the containment envelope 26 and proximate the motor end 14 of the spindle shaft 12. The spindle position sensor 46 detects the magnitude of motion of the spindle shaft 12 and relative position. Vibration can be detected in both the magnitude and direction along the spindle shaft 12 by the spindle position sensor 46. The spindle position sensor 46 can include accelerometer(s) 48.

Electromagnets 50 can be in operative communication with the ferrofluid 28. The electromagnets 50 can be located within the containment envelope 26 and in contact with the ferrofluid 28 as shown. In exemplary embodiments, the electromagnets 50 can be activated to produce an electromagnetic field that influences the ferrofluid 28 and changes the viscosity of the ferrofluid 28. The electromagnets 50 are shown mounted to the endplate 36 within the containment envelope 26 and proximate the spindle position sensor 46.

A control system 52 can be in operative communication with the spindle position sensor 46 and the electromagnets 50. The control system 52 may include hardware, firmware, and/or software components that are configured to perform the functions disclosed herein, including the functions of the active damper for machine spindle 10. While not specifically shown, the control system 52 may include other computing devices (e.g., servers, mobile computing devices, etc.) and computer aided manufacturer (CAM) systems which may be in communication with each other and/or the control system 52 via a communication network 54 to perform one or more of the disclosed functions. The control system 52 may include at least one processor 56 (e.g., a controller, microprocessor, microcontroller, digital signal processor, etc.), memory 58, and an input/output (I/O) subsystem 60. The control system 52 may be embodied as any type of computing device e.g., a server, an enterprise computer system, a network of computers, a combination of computers and other electronic devices, or other electronic devices. Although not specifically shown, the I/O subsystem 60 typically includes, for example, an I/O controller, a memory controller, and one or more I/O ports. The processor 56 and the I/O subsystem 60 are communicatively coupled to the memory 58. The memory 58 may be embodied as any type of computer memory device (e.g., volatile memory such as various forms of random access memory).

The electromagnet's 50 intensity, frequency and timing can be adjusted to counteract vibrations in the spindle shaft 12 via an automatic feedback loop in the control system 52.

Vibration magnitude and direction detected in the machine spindle 100 can be detected with the spindle position sensor 46. Vibrations occurring in the X axis direction can be cancelled out by exciting the ferrofluid 28 when the first damping tab 40 is located at a predetermined position, such as the six o'clock position, as shown at Fig. 4. The second damping tab 42 can be employed to cancel out vibrations occurring along the Y axis direction. Varying combinations of vibration vectors can occur in both X and Y directions. The timing of excitation of the electromagnets 48 can be manipulated to cancel out any vibration vector necessary. The active damper for machine spindle 10 can operate on a closed loop system to cancel out vibration developed in the machine spindle 100 during material removal operations.

A technical advantage of the disclosed active damper for machine spindle can include being employed in both milling and turning machines.

Another technical advantage of the disclosed active damper for machine spindle can include the capacity to reduce or eliminate unwanted vibrations that impact machining operation.

Another technical advantage of the disclosed active damper for machine spindle can include an improvement in the surface finish and geometry of the part being machined.

Another technical advantage of the disclosed active damper for machine spindle can include increasing the lifespan of the machine bearings.

There has been provided an active damper for machine spindles. While the active damper for machine spindles has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An active damper for machine spindles comprising:
a spindle shaft having a motor end opposite an endmill end and a damper portion located between the motor end and the endmill end;
a spindle motor in operative communication with the spindle shaft proximate the motor end;
an endmill in operative communication with the spindle shaft proximate the endmill end;
a damping chamber surrounding the spindle shaft proximate the damper portion, wherein the damping chamber comprises a containment envelope containing a ferrofluid;
at least one damping tab attached to the spindle shaft located within the damping chamber, the at least one damping tab in operative communication with the ferrofluid;
electromagnets in operative communication with the ferrofluid; and
a spindle position sensor in operative communication with the spindle shaft, the spindle position sensor configured to detect a magnitude of motion and relative position of the spindle shaft.

2. The active damper for machine spindles according to claim 1, further comprising:
a control system in operative communication with the spindle position sensor and the electromagnets.

3. The active damper for machine spindles according to claim 1 or 2, wherein the damping tab is configured to impinge with the ferrofluid, such that the ferrofluid can at least one of constrain the movement of the damping tab and allow movement of the damping tab responsive to the viscosity of the ferrofluid.

4. The active damper for machine spindles according to any of claims 1 to 3, further comprising:
flow orifices formed within the damping tab, wherein the flow orifices are configured to influence the reaction of the damping tab relative to the ferrofluid.

5. The active damper for machine spindles according to claim 4, wherein the containment envelope containing a ferrofluid is sealed closed, such that the ferrofluid is contained and does not flow outside the containment envelope.

6. The active damper for machine spindles according to any of claims 1 to 5, wherein the electromagnets are located within the containment envelope and in contact with the ferrofluid.

7. The active damper for machine spindles according to any of claims 1 to 6, further comprising:
a sealed bearing supporting the spindle shaft proximate a spindle shaft penetration formed through the containment envelope; the spindle shaft being received through the spindle shaft penetration; the sealed bearing configured to prevent ferrofluid leakage out of the containment envelope along the spindle shaft.

8. The active damper for machine spindles according to any of claims 1 to 7, wherein:
the electromagnets are configured to produce an electromagnetic field that changes the viscosity of the ferrofluid.

9. The active damper for machine spindles according to any of claims 3 to 8, wherein the at least one damping tab comprises a first damping tab and a second damping tab attached to the spindle shaft, the first damping tab and second damping tab being orthogonal to each other relative to an axis of the spindle shaft.

10. The active damper for machine spindles according to claim 9, wherein the first damping tab and the second damping tab are oriented relative to each other configured to influence damping vibration along the spindle shaft in the X axis and Y axis directions relative to the axis of the spindle shaft being a Z axis.

11. The active damper for machine spindles according to claim any of claims 1 to 10, further comprising:
a sealed bearing supporting the spindle shaft proximate a spindle shaft penetration formed through the containment envelope; the spindle shaft being received through the spindle shaft penetration; the sealed bearing configured to prevent ferrofluid leakage out of the containment envelope along the spindle shaft.

12. The active damper for machine spindles according to any of claims 1 to 11, wherein the at least one damping tab can extend radially outward from a longitudinal axis of the spindle shaft a predetermined width and the damping tab can extend longitudinally along the spindle shaft a predetermined length.

13. A process of forming an active damper system for a machine spindle comprising:
providing a spindle shaft having a motor end opposite an endmill end and a damper portion located between the motor end and the endmill end;
attaching a spindle motor in operative communication with the spindle shaft proximate the motor end;
attaching an endmill in operative communication with the spindle shaft proximate the endmill end;
surrounding the spindle shaft proximate the damper portion with a damping chamber, wherein the damping chamber comprises a containment envelope containing a ferrofluid;
attaching at least one damping tab to the spindle shaft located within the damping chamber;
contacting the at least one damping tab in operative communication with the ferrofluid;
placing electromagnets in operative communication with the ferrofluid, the electromagnets configured to produce an electromagnetic field that changes the viscosity of the ferrofluid;
placing a spindle position sensor in operative communication with the spindle shaft, the spindle position sensor configured to detect a magnitude of motion and relative position of the spindle shaft; and
coupling a control system in operative communication with the spindle position sensor and the electromagnets.

14. The process of claim 13,
further comprising:
configuring the damping tab to impinge with the ferrofluid;
constraining the movement of the damping tab with the ferrofluid responsive to the viscosity of the ferrofluid; and
allowing movement of the damping tab with the ferrofluid responsive to the viscosity of the ferrofluid; and/or
wherein the at least one damping tab comprises a first damping tab and a second damping tab attached to the spindle shaft, the first damping tab and second damping tab being orthogonal to each other relative to an axis of the spindle shaft; and/or
further comprising:
forming flow orifices within the at least one damping tab; and
configuring the flow orifices to influence the reaction of the at least one damping tab relative to the ferrofluid.

15. The process of claim 13 or 14,
further comprising:
supporting the spindle shaft with a sealed bearing proximate a spindle shaft penetration formed through the containment envelope; the spindle shaft being received through the spindle shaft penetration; and
configuring the sealed bearing to prevent ferrofluid leakage out of the containment envelope along the spindle shaft; and/or
further comprising:
orienting the first damping tab and the second damping tab relative to each other configured to influence damping vibration along the spindle shaft in the X axis and Y axis directions relative to the axis of the spindle shaft being a Z axis; and/or
further comprising:
detecting vibration magnitude and direction in the machine spindle with the spindle position sensor;
cancelling out a vibration occurring in the X axis direction by exciting the ferrofluid when the first damping tab is located at a predetermined X position; and
cancelling out vibration occurring in the Y axis direction by exciting the ferrofluid when the second damping tab is located at a predetermined Y position.
